# EUROPÄISCHE PATENTSCHRIFT

(11) **EP 3 686 462 B1**
(45) Veröffentlichungstag und Bekanntmachung des Hinweises auf die Patenterteilung: **09.06.2021**
(21) Anmeldenummer: 19154063.2
(22) Anmeldetag: 28.01.2019
(51) Int. Cl.: F16H 55/18, F16H 55/06, F16H 57/12, F16H 55/08

(54) **ZAHNRAD ZUR VERWENDUNG IN EINEM ZAHNRADGETRIEBE, ZAHNRADPAARUNG EINES ZAHNRADGETRIEBES SOWIE ZAHNRADGETRIEBE MIT EINER DERARTIGEN ZAHNRADPAARUNG**
TOOTHED WHEEL FOR USE IN A GEAR TRANSMISSION, GEAR PAIRING OF A GEAR TRANSMISSION AND GEAR TRANSMISSION WITH SUCH A GEAR PAIRING
ROUE DENTÉE DESTINÉE À ÊTRE UTILISÉE DANS UN ENGRENAGE, APPARIEMENT DE ROUES DENTÉES D'UN ENGRENAGE AINSI QU'ENGRENAGE DOTÉ D'UN TEL APPARIEMENT DE ROUES DENTÉES

(43) Veröffentlichungstag der Anmeldung: 29.07.2020
(73) Patentinhaber: IMS Gear SE & Co. KGaA, 78166 Donaueschingen (DE)
(72) Erfinder: Rieple, Adrian, 78183 Hüfingen (DE); Koop, Matthias, 85375 Neufahrn bei Freising (DE); Birk, Sebastian, 78647 Trossingen (DE); Oberle, Stephan, 78050 Villingen-Schwenningen (DE)
(74) Vertreter: Westphal, Mussgnug & Partner Patentanwälte mbB

(56) Entgegenhaltungen:
- EP-A1- 3 293 420
- DE-A1-102010 034 261
- GB-A- 2 224 805
- JP-A- S5 884 257
- US-A1- 2013 160 589

## Beschreibung

Die vorliegende Erfindung betrifft ein Zahnrad zur Verwendung in einem Zahnradgetriebe. Weiterhin betrifft die Erfindung eine Zahnradpaarung umfassend ein derartiges Zahnrad sowie ein Zahnradgetriebe mit einer solchen Zahnradpaarung.

Zahnradgetriebe werden in nahezu jedem Antriebsstrang eingesetzt, insbesondere dann, wenn Drehzahlen und Drehmomente innerhalb des Antriebsstrangs an den jeweiligen Anwendungsfall angepasst werden sollen. Mit fortschreitender Elektrifizierung des Antriebsstrangs werden als Drehmomentquelle immer häufiger Elektromotoren eingesetzt, beispielsweise, um zwei Bauteile relativ zueinander zu bewegen. Üblicherweise laufen aber Elektromotoren mit einer relativ hohen Drehzahl, so dass in vielen Fällen ein Zahnradgetriebe eingesetzt wird, um die Drehzahl so zu wandeln, dass die beiden Bauteile mit der gewünschten Geschwindigkeit verstellt werden können. In einigen Fällen werden mehrstufige Zahnradgetriebe verwendet, wenn die beiden Bauteile besonders langsam relativ zueinander bewegt werden sollen oder wenn hierzu besonders hohe Drehmomente notwendig sind.

Als Verzahnungsprofil werden in vielen Fällen Evolventen verwendet. Insbesondere dann, wenn die beiden in Eingriff stehenden Zahnräder einen deutlich unterschiedlichen Wärmeausdehnungskoeffizient aufweisen, kann der Eingriff je nach momentan herrschender Temperatur besser oder schlechter sein. Unter einem besseren Eingriff soll im Folgenden ein reduziertes Verdrehflankenspiel und unter einem schlechteren Eingriff ein erhöhtes Verdrehflankenspiel verstanden werden. Das Verdrehflankenspiel bezeichnet den Winkel, um den die Abtriebswelle eines Getriebes bei gleichzeitig festgehaltener Antriebswelle gegenüber dieser verdreht werden kann.

Beispielsweise dann, wenn das eine Zahnrad aus Kunststoff und das andere Zahnrad aus Metall besteht oder wenn die Wärmeausdehnungskoeffizienten der einzelnen Komponenten eines Getriebes, beispielsweise die achsabstands-/ wälzkreisabhängigen Komponenten wie Gehäuse einen deutlichen Unterschied aufweisen, wird am Verzahnungseingriff ein erheblicher Unterschied des vorliegenden Radial-/ Verdrehflankenspiels unter Temperaturveränderung vorliegen. In diesem Fall wird das Verzahnungsprofil so ausgelegt, dass bei den im Betrieb vorwiegend herrschenden Temperaturen der Eingriff so optimal wie möglich ist. In einigen Anwendungen können aber die im Betrieb herrschenden Temperaturen sehr stark variieren, so dass sich ein sehr großer Betriebstemperaturbereich ergibt. Aufgrund der oben erwähnten unterschiedlichen Wärmeausdehnungskoeffizienten der beiden in Eingriff stehenden Zahnräder kann der Eingriff nicht über den gesamten Betriebstemperaturbereich optimal gehalten werden. Folglich kann sich beispielsweise am oberen Ende des Betriebstemperaturbereichs ein ausreichend kleines Verdrehflankenspiel ergeben, während am unteren Ende ein unerwünscht hohes Verdrehflankenspiel vorliegt.

Die EP 3 293 420 A1, die JP S58 84257 A, die US 2013/160589 A1, die GB 2 224 805 A und die DE 10 2010 034 261 A1 zeigen Zahnräder, bei denen der Versuch unternommen worden ist, den Eingriff auch bei unterschiedlichen Temperaturen zu verbessern.

Aufgabe einer Ausführungsform der vorliegenden Erfindung ist es, ein Zahnrad anzugeben, mit welchem es mit einfachen und kostengünstigen Mitteln möglich ist, eine Abhilfe für die oben genannte Situation zu schaffen und insbesondere das Verdrehflankenspiel über einen weiten Temperaturbereich gering zu halten. Des Weiteren liegt einer Ausführung und einer Ausbildung der vorliegenden Erfindung die Aufgabe zugrunde, eine Zahnradpaarung bzw. ein Zahnradgetriebe vorzuschlagen, welches ein derartiges Zahnrad aufweist.

Diese Aufgabe wird mit den in den Ansprüchen 1, 22 und 23 angegebenen Merkmalen gelöst. Vorteilhafte Ausführungsformen sind Gegenstand der Unteransprüche.

Eine Ausführungsform der Erfindung betrifft ein Zahnrad zur Verwendung in einem Zahnradgetriebe, umfassend
- einen Grundkörper, der einen Zahnkranz mit
- einer Anzahl von ersten Zähnen mit einer ersten Verformbarkeit und
- einer Anzahl von zweiten Zähnen mit einer zweiten Verformbarkeit bildet, wobei
- die zweite Verformbarkeit größer ist als die erste Verformbarkeit,
- die zweiten Zähne nur in Umfangsrichtung ein Übermaß gegenüber den ersten Zähnen aufweisen.

Aufgrund der erhöhten Verformbarkeit wirken die zweiten Zähne wie ein Federelement mit einer zweiten Federrate, welche geringer ist als die erste Federrate der ersten Zähne. Daher sind die zweiten Zähne mit einem Übermaß gegenüber den ersten Zähnen ausgestattet, welches sich in einer erhöhten Erstreckung der zweiten Zähne nur in Umfangrichtung gegenüber den ersten Zähnen, beispielsweise in einer erhöhten Zahndicke an den Zahnflanken äußern kann.

Es ist ausreichend nur in einer Umfangsrichtung ein Übermaß vorzusehen. Insbesondere in diesem Fall kann das Übermaß mit einer asymmetrischen Gestaltung der zweiten Zähne erreicht werden.

Die zweiten Zähne sorgen bei einem großen Betriebstemperaturbereich beispielsweise bei Temperaturen nahe dem unteren Ende des Betriebstemperaturbereichs für ein geringes Verdrehflankenspiel, während die ersten Zähne bei Temperaturen nahe dem oberen Ende des Betriebstemperaturbereichs das Verdrehflankenspiel gering halten. Aufgrund der erhöhten Verformbarkeit der zweiten Zähne führt das Übermaß der zweiten Zähne nicht zu einem Verklemmen der in Eingriff stehenden Zahnräder. Das erforderliche, funktionsbezogen Übermaß wird je nach Anwendung und Betriebssituation entsprechend angepasst.

Nach Maßgabe einer weiteren Ausführungsform ist der Zahnkranz im Bereich der ersten Zähne in Umfangsrichtung unterbrechungsfrei geschlossen. In dieser Ausführungsform wird ein unterbrechungsfreier Eingriff zwischen den ersten Zähnen und dem weiteren Zahnrad bereitgestellt. Es werden folglich ein optimaler und gleichmäßiger Eingriff ohne Unterbrechung zwischen dem vorschlagsgemäßen Zahnrad und dem weiteren Zahnrad und damit ein ruhiger Lauf gewährleistet.

In einer weitergebildeten Ausführungsform kann das Zahnrad eine Längsachse aufweisen, wobei die ersten Zähne bezogen auf die Längsachse unter Bildung eines Axialabstands versetzt zu den zweiten Zähnen angeordnet sind. Hierdurch wird die Fertigung des vorschlagsgemäßen Zahnrads vereinfacht, insbesondere deshalb, da ein Formwerkzeug, beispielsweise ein Schieber, zwischen den ersten Zähnen und den zweiten Zähnen eingebracht werden kann. Zudem stellt der Abstand einen Raum zur Verfügung, in welchen sich die zweiten Zähne hinein verformen können. Aufgrund der Möglichkeit der zweiten Zähne, sich in diesen Raum hinein verformen zu können, führt das Übermaß zu keiner wesentlichen Verschlechterung des Eingriffs des vorschlagsgemäßen Zahnrads mit dem weiteren Zahnrad.

Bei einer weitergebildeten Ausführungsform können die ersten Zähne eine erste Breite und die zweiten Zähne eine zweite Breite aufweisen, wobei die erste Breite größer ist als die zweite Breite. Die zweite Breite kann so gewählt werden, dass die Verformbarkeit der zweiten Zähne entlang der Richtung der Drehachse erhöht wird. Das Übermaß der zweiten Zähne kann in dieser Ausführungsform sowohl in Umfangsrichtung als auch in Richtung der Drehachse, also axial, durch Verformung und insbesondere durch Biegung so verschoben werden, dass der Eingriff zwischen dem vorschlagsgemäßen Zahnrad und dem weiteren Zahnrad nicht gestört wird.

Gemäß einer weiteren Ausführungsform bildet der Grundkörper einen Nabenabschnitt, wobei die zweiten Zähne Verbindungsstege umfassen, welche die zweiten Stege mit dem Nabenabschnitt verbinden. Dabei können auf einem oder allen der Verbindungsstege ein einziger zweiter Zahn oder mehrere zweite Zähne angeordnet sein. Die Verbindungsstege wirken dabei wie ein einseitig eingespannter Biegebalken und daher wie ein Federelement. Bei allen Ausführungsformen, bei denen die zweiten Zähne auf den Verbindungsstegen angeordnet sind, soll sich die zweite Verformbarkeit auch auf die Verbindungsstege erstrecken oder sich auf die Verbindungsstege beschränken. Mittels des Querschnitts und des hiermit verbundenen Widerstandsmoments sowie mit der Länge der Verbindungsstege kann die zweite Verformbarkeit der zweiten Zähne und der Verbindungsstege eingestellt werden. Es ist genauso gut möglich, nur die Verbindungsstege mit der zweiten Verformbarkeit auszustatten und die zweiten Zähne als solche genauso zu gestalten wie die ersten Zähne.

Bei einer weiteren Ausführungsform ändert sich bezogen auf die Längsachse in radialer Richtung die zweite Breite. Eine weitergebildete Ausführungsform zeichnet dadurch aus, dass auf den Verbindungsstegen eine Anzahl von Rippen angeordnet ist. In beiden Ausführungsformen lässt sich die Biegesteifigkeit insbesondere der Verbindungsstege in radialer Richtung ändern, so dass die zweite Verformbarkeit sehr zielgerichtet eingestellt werden kann.

Bei einer weiteren Ausführungsform können die zweiten Zähne in einem kreissektorförmigen Bereich des Zahnrads angeordnet sein. In einigen Anwendungen spielt das erhöhte Verdrehflankenspiel nur beim Anfahren aus der Ruhestellung eine Rolle. Sobald die in Eingriff stehenden Zahnräder drehen, kann in diesen Anwendungen der nicht optimale Eingriff insbesondere am unteren Rand des Betriebstemperaturbereichs akzeptiert werden. Für den Fall, dass die Ruhestellung einer bestimmten Drehstellung des vorschlagsgemäßen Zahnrads zugeordnet ist, genügt es, die zweiten Zahnräder in einem kreissektorförmigen Bereich anzuordnen. Außerhalb des kreissektorförmigen Bereichs sind ausschließlich die ersten Zähne im Eingriff, so dass dort die zweiten Zähne keinen den Eingriff störenden Einfluss ausüben können.

Eine weitergebildete Ausführungsform zeichnet sich dadurch aus, dass die erste Breite der ersten Zähne im kreissektorförmigen Bereich geringer ist als außerhalb des kreissektorförmigen Bereichs. Im kreissektorförmigen Bereich weist der Zahnkranz innerhalb der ersten Zähne einen Rücksprung auf, in welchem die zweiten Zähne ganz oder teilweise angeordnet werden können. Insofern kann der axiale Bauraum, der für die ersten und die zweiten Zähne benötigt wird, gering gehalten werden, so dass das vorschlagsgemäße Zahnrad mit einer geringen Erstreckung entlang der Längsachse bereitgestellt werden kann.

Nach Maßgabe einer weiteren Ausführungsform sind die zweiten Zähne auf einem gemeinsamen Träger angeordnet. Bei allen Ausführungsformen, bei denen die zweiten Zähne auf dem gemeinsamen Träger angeordnet sind, soll sich die zweite Verformbarkeit auch auf den gemeinsamen Träger erstrecken. Der gemeinsame Träger kann als separates Bauteil gefertigt und anschließend mit dem vorschlagsgemäßen Zahnrad verbunden werden. Hierdurch lässt sich die Fertigung vereinfachen. Zudem können die Träger und die zweiten Zähne in diesem Fall aus einem anderen Material als das des übrigen Zahnrads gefertigt werden, so dass auch über das Material die zweite Verformbarkeit der zweiten Zähne wunschgemäß eingestellt werden kann.

Eine weitere Ausführungsform zeichnet sich dadurch aus, dass der Zahnkranz im Bereich der zweiten Zähne innerhalb des gemeinsamen Trägers in Umfangsrichtung unterbrechungsfrei ist. Diese Ausführungsform bietet sich an, wenn die zweite Verformbarkeit nicht zu groß gewählt werden soll. Die Fertigung des zweiten Trägers ist in dieser Ausführungsform einfach.

Nach Maßgabe einer weiteren Ausführungsform weist der Träger entlang der Längsachse einen Durchbruch oder eine Vertiefung auf. Aufgrund des Durchbruchs oder der Vertiefung kann die Masse des Trägers gering gehalten werden, ohne dass die Einstellbarkeit der zweiten Verformbarkeit wesentlich beeinträchtigt wird.

In einer weitergebildeten Ausführungsform kann der Träger eine vom Durchbruch oder von der Vertiefung ausgehende und radial nach außen verlaufende Ausnehmung oder einen vom Durchbruch oder von der Vertiefung ausgehenden und radial nach außen verlaufenden Spalt aufweisen. Aufgrund des Spalts oder der Ausnehmung wird der Träger gezielt geschwächt, wodurch die zweite Verformbarkeit erhöht werden kann.

Bei einer weitergebildeten Ausführungsform kann der Träger in Richtung der Längsachse einen Axialabstand und/oder in Umfangsrichtung einen Umfangsabstand zu den ersten Zähnen aufweisen. In beiden Fällen wird eine Beweglichkeit des Trägers in Bezug auf die ersten Zähne ermöglicht, und zwar in Richtung der Längsachse und/oder in Umfangsrichtung. Hierdurch kann die Richtung der zweiten Verformbarkeit vorgegeben werden.

Bei einer weiteren Ausführungsform können die zweiten Zähne ein Verzahnungsprofil mit einer Zahnkopfmodifikation aufweisen. Mit der Zahnkopfmodifikation kann das Einlaufverhalten der zweiten Zähne in die Verzahnung des weiteren Zahnrads gezielt verändert werden. Eine Zahnkopfmodifikation ist einerseits für die Erhöhung der Verformbarkeit nicht zwingend erforderlich und führt andererseits nicht zwangsläufig zu einem Übermaß. Jedoch kann die Zahnkopfmodifikation so ausgestaltet sein, dass ein Übermaß der zweiten Zähne gegenüber den ersten Zähnen bereitgestellt wird. Insbesondere kann neben dem verbesserten Einlaufverhalten gleichzeitig das Verdrehflankenspiel reduziert werden. Sofern zweckmäßig, können auch die ersten Zähne mit einer Zahnkopfmodifikation versehen werden, wodurch ebenfalls das Einlaufverhalten verbessert werden kann.

In einer weiteren Ausführungsform weisen die zweiten Zähne eine radial nach außen verlaufende Nut oder eine radial nach außen verlaufende Lücke auf. Hierdurch kann die zweite Verformbarkeit innerhalb der zweiten Zähne verändert werden. Insbesondere dann, wenn ein Übermaß gegenüber den ersten Zähnen vorhanden ist, kann dieses durch eine entsprechende Verformung der zweiten Zähne so verteilt werden, dass ein Verklemmen verhindert wird.

Eine weitergebildete Ausführungsform zeichnet sich dadurch aus, dass das Zahnrad aus einem technischen Thermoplast oder einem Hochleistungsthermoplast besteht. Nicht abschließende Beispiele für derartige Thermoplasten sind POM (Polyoxymethlyen), PA (Polyamid), PK (Polyketon), PPA (Polyphthalamid, PEEK (Polyetherehterketon) oder PPS (Polyphenylsulfid). Weiterhin können teilaromatische Polyamide wie PA4T, PA6T oder PA9T zum Einsatz kommen. Derartige Thermoplaste ermöglichen einerseits die Herstellung des vorschlagsgemäßen Zahnrads im Spritzgussverfahren, so dass die vorschlagsgemäßen Zahnräder kostengünstig in hohen Stückzahlen hergestellt werden können. Andererseits stellen diese Thermoplaste eine hohe Verschleißbeständigkeit bereit, so dass die Zahnräder eine hohe Betriebsdauer aufweisen. Es kann sich aber je nach Anwendungsfall anbieten, einen anderen Kunststoff, beispielsweise einen Duroplast, zur Fertigung des vorschlagsgemäßen Zahnrads einzusetzen.

In einer weiteren Ausführungsform weist das Zahnrad ein Elastizitätsmodul von 1000 bis 3500 MPa auf. Mit diesem Elastizitätsmodul kann die zweite Verformbarkeit so eingestellt werden, dass sie den erwähnten Einfluss insbesondere auf das Verdrehflankenspiel aufweist.

Nach Maßgabe einer weiteren Ausführungsform ist der technische Thermoplast oder der Hochleistungsthermoplast ganz oder teilweise selbstverstärkend oder faserverstärkt ist, wobei der Faseranteil bis zu 35% und insbesondere zwischen 5 und 30% beträgt. Um den technischen Thermoplast oder den Hochleistungsthermoplast selbstverstärkend auszuführen, können seine Molekülstruktur und die Kristallinität gezielt verändert werden. Hierdurch kann insbesondere die Zugfestigkeit gesteigert werden, ohne weitere Komponenten zusetzen zu müssen. Weiterhin kann der selbstverstärkende Kunststoff sehr zäh ausgeführt werden, so dass es erst bei Temperaturen von unter -35°C bricht. Darüber hinaus können den selbstverstärkenden Kunststoffen weitere Komponenten zugesetzt werden, um bestimmte Eigenschaften gezielt zu verändern. Beide Maßnahmen zielen darauf ab, das vorschlagsgemäße Zahnrad auch für hohe Beanspruchungen einsetzen zu können.

Eine weitere Ausführungsform zeichnet sich dadurch aus, dass das Zahnrad dort, wo der technische Thermoplast oder der Hochleistungsthermoplast selbstverstärkend oder faserverstärkt ist, ein E-Modul von zwischen 6000 und 13000 MPa aufweist. Diese E-Module werden insbesondere außerhalb der zweiten Zähne und außerhalb der Verbindungsstege eingestellt. Insbesondere der Nabenabschnitt wird mit einem derartigen E-Modul ausgestattet, um hohe Drehmomente in das vorschlagsgemäße Zahnrad einleiten zu können. Es ist daher möglich, bestimmte Bereiche des vorschlagsgemäßen Zahnrads gezielt insbesondere mit anderen mechanischen Eigenschaften auszustatten, ohne einen anderen Thermoplast verwenden zu müssen.

Nach einer weitergebildeten Ausführungsform bestehen die ersten Zähne aus einem ersten Material, insbesondere einem ersten technischen Thermoplast oder einem ersten Hochleistungsthermoplast und die zweiten Zähne aus einem zweiten Material, insbesondere aus einem zweiten technischen Thermoplast oder einem zweiten Hochleistungsthermoplast, wobei der zweite technische Thermoplast oder der zweite Hochleistungsthermoplast ein geringeres Elastizitätsmodul und/oder einen geringeren Wärmeausdehnungskoeffizient aufweist als der erste technische Thermoplast oder der erste Hochleistungsthermoplast. In dieser Ausführungsform bestehen die ersten Zähne und die zweiten Zähne aus einem unterschiedlichen Material. Insbesondere dann, wenn das vorschlagsgemäße Zahnrad aus zwei verschiedenen Thermoplasten besteht, können beispielsweise die zweiten Zähne und/oder die Verbindungsstege an das übrige Zahnrad angespritzt werden. Auch ist es möglich, die zweiten Zähne und/oder die Verbindungsstege als separate Teile herzustellen und nach Fertigstellung des übrigen Zahnrads die zweiten Zähne und/oder die Verbindungsstege mit dem übrigen Zahnrad zu verbinden. Wie eingangs erwähnt, soll das Verdrehflankenspiel in einem weiten Temperaturbereich gering gehalten werden. In diesem Ausführungsbeispiel dehnen sich die zweiten Zähne bei steigenden Temperaturen weniger stark aus als die ersten Zähne. Es ist daher möglich, einen störenden Eingriff der zweiten Zähne trotz Übermaß zu verhindern, wenn der Betriebstemperaturbereich erreicht ist.

Aufgrund der Möglichkeit, einen zweiten technischen Thermoplast oder einen zweiten Hochleistungsthermoplast mit einem geringeren Elastizitätsmodul einzusetzen, kann die zweite Verformbarkeit allein hierdurch erhöht werden, ohne besondere Geometrien für die zweiten Zähne und/oder die Verbindungsstege vorsehen zu müssen.

Nach Maßgabe einer weiteren Ausführungsform weist das Zahnrad eine Geradverzahnung oder eine Schrägverzahnung mit einem Schrägungswinkel β von bis zu 15° auf. Das vorschlagsgemäße Zahnrad kann folglich nicht nur für Zahnradgetriebe mit einer Geradverzahnung verwendet werden, sondern auch für Stirnradgetriebe mit Schrägverzahnung. Stirnradgetriebe mit Schrägverzahnung zeichnen sich aufgrund der erhöhten Sprungüberdeckung durch ein ruhigeres Laufverhalten gegenüber der Geradverzahnung aus.

Eine Ausführung der Erfindung betrifft eine Zahnradpaarung eines Zahnradgetriebes, umfassend ein Zahnrad nach einem der vorherigen Ausführungsformen, und zumindest ein weiteres Zahnrad, welches mit dem Zahnrad in Eingriff bringbar ist oder in Eingriff steht. Das weitere Zahnrad ist dabei insbesondere aus Metall gefertigt, während das vorschlagsgemäße Zahnrad aus Kunststoff besteht, so dass sich eine Materialpaarung Kunststoff-Metall ergibt.

Eine Ausbildung der Erfindung betrifft ein Zahnradgetriebe umfassend eine Zahnradpaarung nach der zuvor offenbarten Ausführung. Die technischen Effekte und Vorteile, die sich mit der vorschlagsgemäßen Zahnradpaarung sowie mit dem vorschlagsgemäßen Zahnradgetriebe erreichen lassen, entsprechen denjenigen, die für das vorliegende Zahnrad erörtert worden sind. Zusammenfassend sei darauf hingewiesen, dass sich das Verdrehflankenspiel insbesondere bei großen Betriebstemperaturbereichen am oberen und unteren Ende gering halten lässt.

Beispielhafte Ausführungsformen der Erfindung werden im Folgenden unter Bezugnahme auf die beigefügten Zeichnungen näher erläutert. Es zeigen
- Figuren 1A bis 1C: ein erstes Ausführungsbeispiel einer erfindungsgemäßen Zahnradpaarung anhand von verschiedenen Ansichten,
- Figur 2: ein zweites Ausführungsbeispiel eines erfindungsgemäßen Zahnrads anhand einer prinzipiellen Schnittdarstellung,
- Figur 3: ein drittes Ausführungsbeispiel eines erfindungsgemäßen Zahnrads anhand einer prinzipiellen Schnittdarstellung,
- Figuren 4A und 4B: ein viertes Ausführungsbeispiel einer erfindungsgemäßen Zahnradpaarung anhand von verschiedenen Ansichten,
- Figur 4C: eine isolierte perspektivische Darstellung eines Zahnrads der Zahnradpaarung nach dem vierten Ausführungsbeispiel,
- Figuren 5A bis 5C: ein fünftes Ausführungsbeispiel einer erfindungsgemäßen Zahnradpaarung anhand von verschiedenen Ansichten,
- Figur 5D: eine isolierte, nicht maßstäbliche Darstellung eines Zahnrads der Zahnradpaarung nach dem vierten Ausführungsbeispiel,
- Figur 6: eine isolierte Draufsicht auf ein sechstes Ausführungsbeispiel einer erfindungsgemäßen Zahnradpaarung, wobei das vorschlagsgemäße Zahnrad nur teilweise dargestellt ist,
- Figuren 7A und 7B: prinzipielle Darstellungen von Verzahnungsprofilen, die bei der vorschlagsgemäßen Zahnradpaarung zur Anwendung kommen können,
- Figur 8A: eine prinzipielle Darstellung eines Zahnradgetriebes mit einer vorschlagsgemäßen Zahnradpaarung, und
- Figur 8B: eine isolierte, nicht maßstäbliche Darstellung eines Zahnrads der Zahnradpaarung nach dem siebten Ausführungsbeispiel.

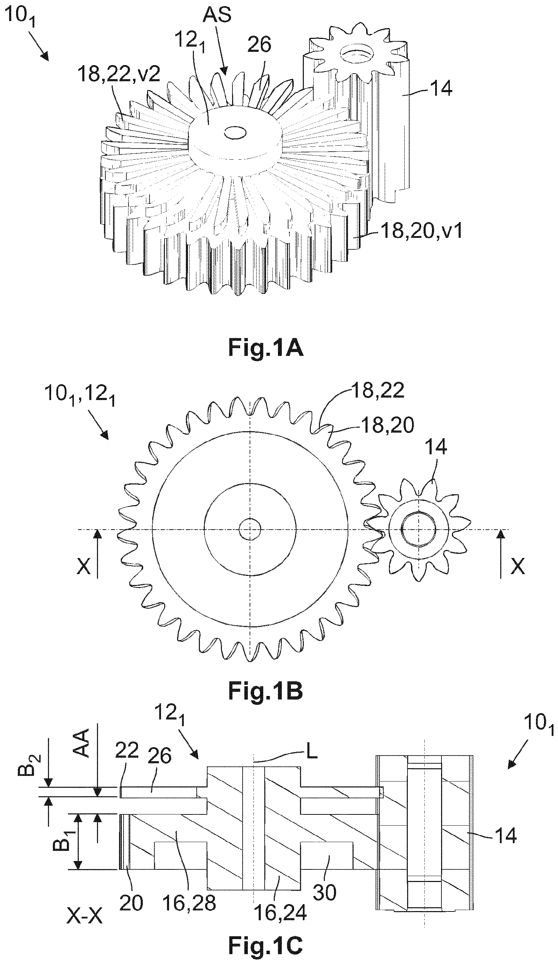

In den Figuren 1A bis 1C ist ein erstes Ausführungsbeispiel einer erfindungsgemäßen Zahnradpaarung 10₁ anhand von verschiedenen Ansichten gezeigt. Dabei zeigt die Figur 1A eine perspektivische Ansicht, während Figur 1B eine Draufsicht und Figur 1C eine Schnittdarstellung entlang der in Figur 1B definierten Schnittebene X-X zeigt. Die Zahnradpaarung 10₁ umfasst ein erfindungsgemäßes Zahnrad 12₁ nach einem ersten Ausführungsbeispiel und ein weiteres Zahnrad 14, wobei das Zahnrad 12₁ und das weitere Zahnrad 14 in Eingriff miteinander stehen. Im ersten Ausführungsbeispiel sind das Zahnrad 12₁ und das weitere Zahnrad 14 als Stirnräder mit einer Geradverzahnung ausgeführt.

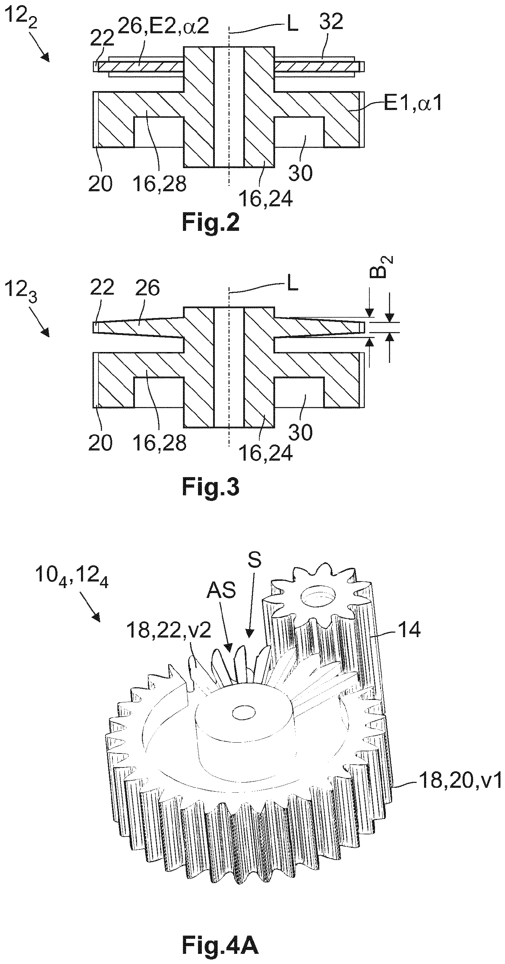

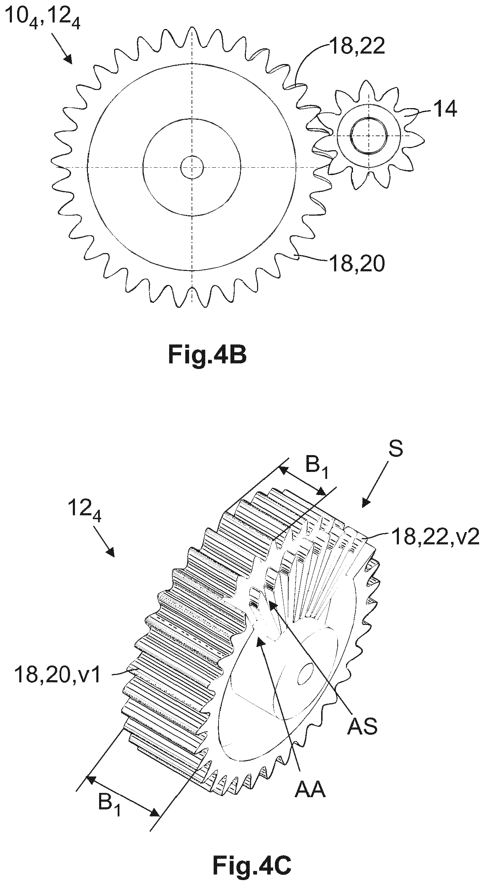

Das Zahnrad 12₁ weist einen Grundkörper 16 auf (siehe Figur 1C), welcher einen Zahnkranz 18 bildet. Der Zahnkranz 18 umfasst eine Anzahl von ersten Zähnen 20 und eine Anzahl von zweiten Zähnen 22. Im ersten Ausführungsbeispiel ist die Anzahl der ersten Zähne 20 und der zweiten Zähne 22 gleich, sie kann aber auch voneinander abweichen (siehe Figuren 4 bis 6). Sowohl die ersten Zähne 20 als auch die zweiten Zähne 22 sind gleichmäßig über den gesamten Umfang des vorschlagsgemäßen Zahnrads 12₁ verteilt angeordnet. Im Bereich der ersten Zähne 20 ist der Zahnkranz 18 in Umfangsrichtung unterbrechungsfrei geschlossen.

Wie insbesondere aus Figur 1C hervorgeht, bildet der Grundkörper 16 einen zylinderförmigen Nabenabschnitt 24. Die zweiten Zähne 22 umfassen stabförmige Verbindungsstege 26, mit denen die zweiten Zähne 22 mit dem Nabenabschnitt 24 verbunden sind. Die Verbindungsstege 26 verlaufen dabei ausgehend vom Nabenabschnitt 24 im Wesentlichen radial nach außen. Im ersten Ausführungsbeispiel umfasst jeder der zweiten Zähne 22 jeweils einen Verbindungssteg 26, so dass die Anzahl der Verbindungsstege 26 gleich der Anzahl der zweiten Zähne 22 ist.

Die ersten Zähne 20 sind über einen vom Grundkörper 16 gebildeten scheibenförmigen Verbindungsabschnitt 28 mit dem Nabenabschnitt 24 verbunden, wobei der Verbindungsabschnitt 28 eine ringförmige Vertiefung 30 aufweist. Die ringförmige Vertiefung dient in erster Linie zur spritztechnischen Optimierung des Zahnrads 12₁, beispielsweise, um die Bildung von Lunkern bei der Herstellung des erfindungsgemäßen Zahnrads 12₁ zu vermeiden. Darüber hinaus kann Material eingespart werden.

Die ersten Zähne 20 weisen eine erste Verformbarkeit v1 und die zweiten Zähne 22 eine zweite Verformbarkeit v2 auf. Aufgrund der geometrischen Gestaltung und/oder der Wahl der Materialparameter der ersten Zähne 20 und der zweiten Zähne 22 ist die zweite Verformbarkeit v2 höher als die erste Verformbarkeit v1.

Das vorschlagsgemäße Zahnrad 12₁ weist eine Längsachse L auf (vgl. Figur 1C), um welche das Zahnrad 12₁ im betriebsbereiten Zustand drehbar ist. Bezogen auf die Längsachse L sind die zweiten Zähne 22 versetzt zu den ersten Zähnen 20 auf dem Nabenabschnitt 24 angeordnet, so dass sich ein Abstand AA in axialer Richtung zwischen den ersten Zähnen 20 und den zweiten Zähnen 22 ausbildet.

Die ersten Zähne 20 weisen eine erste Breite B1 und die zweiten Zähne 22 eine zweite Breite B2 auf, wobei die Verbindungsstege 26 im ersten Ausführungsbeispiel ebenfalls die zweite Breite B2 aufweisen. Die erste Breite B1 ist dabei größer als die zweite Breite B2. Zwischen zwei benachbarten Verbindungsstegen 26 verbleibt ein sich radial nach außen vergrößernder Abstand AS (siehe Figur 1A), so dass der Zahnkranz 18 im Bereich der zweiten Zähne 22 in Umfangsrichtung im Gegensatz zum Bereich der ersten Zähne 20 nicht geschlossen ist.

Im ersten Ausführungsbeispiel ist das Zahnrad 12₁ aus einem technischen Thermoplast oder einem Hochleistungsthermoplast gefertigt. Beispiele für derartige Thermoplaste sind POM (Polyoxymethlyen), PA (Polyamid), PK (Polyketon), PPA (Polyphthalamid, PEEK (Polyetherehterketon) oder PPS (Polyphenylsulfid). Im gesamten Zahnrad 12₁ liegt ein Elastizitätsmodul E von 1000 bis 3500 MPa vor. Je nach verwendetem Thermoplast und je nach gewünschtem Elastizitätsmodul E kann der Thermoplast selbstverstärkend oder faserverstärkt sein. In diesem Fall kann das Zahnrad 12₁ bereichsweise mit unterschiedlichen Elastizitätsmodulen E ausgestattet werden. Beispielsweise kann das gesamte Zahnrad 12₁ mit Ausnahme der Verbindungsstege 26 und der zweiten Zähne 22 mit einem selbstverstärkenden oder faserverstärkten Thermoplast gefertigt werden, so dass die Verbindungsstege 26 und die zweiten Zähne 22 die erhöhte zweite Verformbarkeit v2 aufweisen, während das Zahnrad 12₁ im übrigen Bereich die verringerte erste Verformbarkeit v1 aufweist.

Insbesondere aus der Figur 1B ist ersichtlich, dass die zweiten Zähne 22 so in Bezug auf die ersten Zähne 20 angeordnet sind, dass ein Übermaß in Umfangsrichtung erzielt wird. Im ersten Ausführungsbeispiel sind die zweiten Zähne 22 so ausgestaltet, dass sich bezogen auf die Darstellung in Figur 1B ein einseitiges Übermaß gegenüber den ersten Zähnen 20 gegen den Uhrzeigersinn ergibt, wobei das Zahnrad 12₁ auch so ausgestaltet werden kann, dass sich das einseitige Übermaß im Uhrzeigersinn ergibt. Hieraus wird deutlich, dass das Übermaß allein aus der Anordnung der zweiten Zähne 22 in Bezug auf die ersten Zähne 20 bereitgestellt werden kann. Ein einseitiges Übermaß kann ausreichen, um die gewünschten Effekte auf das Verdrehflankenspiel zu erreichen. Es ist daher nicht zwingend erforderlich, dass die Zahnflanken eine beidseitige Aufdickung aufweisen.

In der Figur 2 ist ein zweites Ausführungsbeispiel des erfindungsgemäßen Zahnrads 12₂ anhand einer Schnittdarstellung gezeigt, die sich an der Schnittebene X-X der Figur 1B orientiert. Der wesentliche Aufbau des Zahnrads 12₂ nach dem zweiten Ausführungsbeispiel gleicht dem Aufbau des Zahnrads 12₁ nach dem ersten Ausführungsbeispiel, so dass im Folgenden nur auf die Unterschiede eingegangen wird. Der Nabenabschnitt 24, der Verbindungsabschnitt 28 und die ersten Zähne 20 sind aus einem ersten technischen Thermoplast oder einem ersten Hochleistungsthermoplast gefertigt, wohingegen die zweiten Zähne 22 und die Verbindungsstege 26 aus einem zweiten technischen Thermoplast oder einem zweiten Hochleistungsthermoplast bestehen. Dabei weisen der erste technische Thermoplast oder der erste Hochleistungsthermoplast ein erstes Elastizitätsmodul E1 und der zweite technische Thermoplast oder der zweite Hochleistungsthermoplast ein zweites Elastizitätsmodul E2 auf, wobei das erste Elastizitätsmodul E1 höher ist als das zweite Elastizitätsmodul E2.

Alternativ oder kumulativ weisen der erste technische Thermoplast oder der erste Hochleistungsthermoplast einen ersten Wärmeausdehnungskoeffizient α1 und der zweite technischen Thermoplast oder der zweite Hochleistungsthermoplast einen zweiten Wärmeausdehnungskoeffizient α2 auf, wobei der erste Wärmeausdehnungskoeffizient α1 höher ist als der zweite Wärmeausdehnungskoeffizient α2.

Zudem ist auf den Verbindungsstegen 26 eine Anzahl von Rippen 32 angeordnet, die ausgehend vom Nabenabschnitt 24 im Wesentlichen radial nach außen verlaufen.

In Figur 3 ist ein drittes Ausführungsbeispiel des erfindungsgemäßen Zahnrads 12₃ ebenfalls anhand einer Schnittdarstellung gezeigt, die sich an der Schnittebene X-X der Figur 1B orientiert. Im dritten Ausführungsbeispiel ändert sich die zweite Breite B2 des Verbindungsstegs 26 derart, dass sie ausgehend vom Nabenabschnitt 24 radial nach außen abnimmt.

In den Figuren 4A und 4B ist ein viertes Ausführungsbeispiel der erfindungsgemäßen Zahnradpaarung 10₄ anhand einer perspektivischen Darstellung bzw. einer Unteransicht dargestellt, welches ein erfindungsgemäßes Zahnrad 12₄ nach einem vierten Ausführungsbeispiel aufweist. In Figur 4C ist das erfindungsgemäße Zahnrad 12₄ isoliert anhand einer perspektivischen Darstellung gezeigt. Im vierten Ausführungsbeispiel sind die zweiten Zähne 22 in einem kreissektorförmigen Bereich S in Umfangsrichtung gleichmäßig verteilt angeordnet. Folglich weist der Zahnkranz 18 nur im kreissektorförmigen Bereich S und nicht über den gesamten Umfang die zweiten Zähne 22 auf.

Aus der Figur 4B ist erkennbar, dass die zweiten Zähne 22 wie auch im ersten Ausführungsbeispiel so ausgestaltet sind, dass sie ein einseitiges Übermaß gegenüber den ersten Zähnen 20 bereitstellen. Bezogen auf die Darstellung in Figur 4B ist das Übermaß gegenüber den ersten Zähnen 20 gegen den Uhrzeigersinn angeordnet. Auch ein Übermaß gegenüber den ersten Zähnen 20 im Uhrzeigersinn ist denkbar.

Wie insbesondere aus Figur 4C erkennbar, ist die erste Breite B1 der ersten Zähne 20 innerhalb des kreissektorförmigen Bereichs S geringer als außerhalb. Der kreissektorförmige Bereich S wird von den ersten Zähnen 20, welche die größere erste Breite B1 aufweisen, in Umfangsrichtung begrenzt. Wiederum verbleibt ein Axialabstand AA zwischen den ersten Zähnen 20 und den zweiten Zähnen 22. Wie auch in den drei zuvor beschriebenen Ausführungsbeispielen verbleibt zwischen zwei benachbarten Verbindungsstegen 26 ein sich radial vergrößernder Abstand AS, so dass der Zahnkranz 18 innerhalb der zweiten Zähne 22 im kreissektorförmigen Bereich S nicht geschlossen ist.

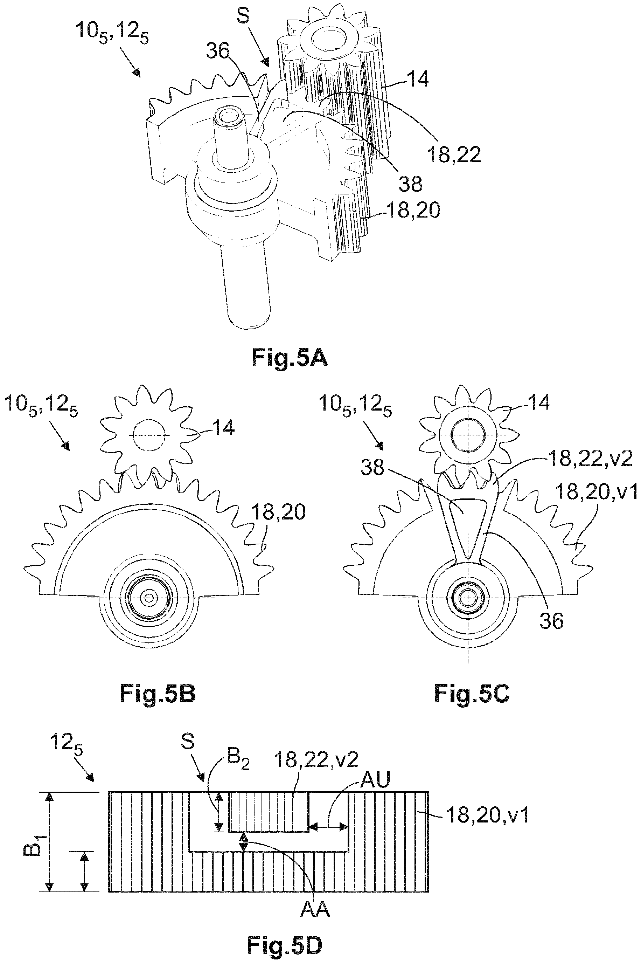

In den Figuren 5A bis 5C ist ein fünftes Ausführungsbeispiel der erfindungsgemäßen Zahnradpaarung 10₅ mit einem Zahnrad 12₅ nach einem fünften Ausführungsbeispiel anhand von verschiedenen Darstellungen gezeigt, wobei Figur 5A eine perspektivische Ansicht, Figur 5B eine Unteransicht und Figur 5C eine Draufsicht ist. In Figur 5D ist das Zahnrad 12₅ nach dem fünften Ausführungsbeispiel anhand einer nicht maßstabsgerechten Draufsicht isoliert dargestellt. Im fünften Ausführungsbeispiel sind die zweiten Zähne 22 auf einem gemeinsamen Träger 36 angeordnet, der innerhalb eines kreissektorförmigen Bereichs S angeordnet ist. Auch im fünften Ausführungsbeispiel weisen die ersten Zähne 20 innerhalb des kreissektorförmigen Bereichs S eine geringere erste Breite B1 auf als außerhalb. Wiederum wird der kreissektorförmige Bereich S in Umfangsrichtung von den ersten Zähnen 20, welche die größere erste Breite B1 aufweisen, begrenzt.

Der gemeinsame Träger 36 weist einen Durchbruch 38 oder eine Vertiefung auf, insbesondere, um die zweite Verformbarkeit v2 zu erhöhen und die Lunkerbildung zu verringern. Der gemeinsame Träger 36 kann als separates Bauteil ausgebildet sein und auf den Nabenabschnitt 24 aufgeschoben werden. Insbesondere dann, wenn der gemeinsame Träger 36 als ein separates Bauteil ausgebildet ist, bietet es sich an, den gemeinsamen Träger 36 aus dem bereits erwähnten zweiten technischen Thermoplast oder dem zweiten Hochleistungsthermoplast zu fertigen. Insgesamt sind drei zweite Zähne 22 auf dem gemeinsamen Träger 36 angeordnet, die aber im Gegensatz zu den zweiten Zähnen 22 der Zahnräder 12 nach den zuvor diskutierten Ausführungsbeispielen ohne Unterbrechung ineinander übergehen. Prinzipiell würde es genügen, nur einen zweiten Zahn 22 vorzusehen, um die erfindungsgemäße Wirkung zu erreichen, auf welches später genauer eingegangen wird.

Aus den Figuren 5B und 5C ist erkennbar, dass auch im fünften Ausführungsbeispiel 10₅ nur ein einseitiges Übermaß vorhanden ist. Bezogen auf die Figur 5B sind die zweiten Zähne 22 so ausgestaltet, dass sie jeweils bezogen auf die ersten Zähne 20 ein Übermaß gegen den Uhrzeigersinn und zwei Übermaße im Uhrzeigersinn bereitstellen. Andere Kombinationen der Ausrichtung des Übermaßes bezogen auf den Uhrzeigersinn sind auch möglich.

Wie aus Figur 5D zu erkennen ist, weisen die auf dem gemeinsamen Träger 36 angeordneten zweiten Zähne 22 entlang der Längsachse L einen Axialabstand AA und in Umfangsrichtung beidseitig einen Umfangsabstand AU auf. Es ist aber genauso gut möglich, den gemeinsamen Träger 36 in axialer Richtung vor oder hinter den ersten Zähnen 20 anzuordnen, so dass es nicht notwendig ist, den kreissektorförmigen Bereich S vorzusehen.

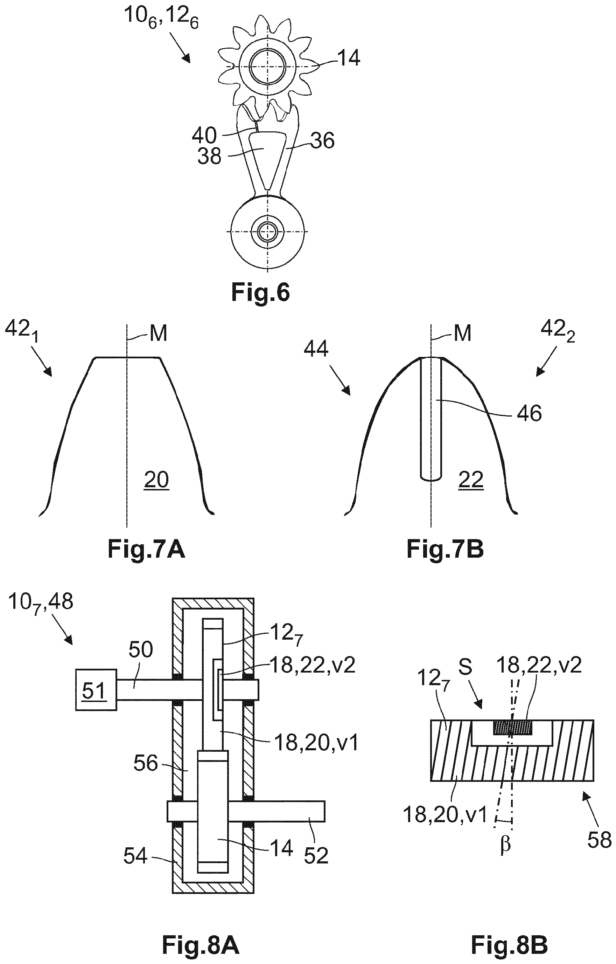

In Figur 6 ist ein sechstes Ausführungsbeispiel der erfindungsgemäßen Zahnradpaarung 10₆ anhand einer Draufsicht dargestellt, welches zu einem großen Teil der Zahnradpaarung 10₅ nach dem fünften Ausführungsbeispiel gleicht. Daher ist aus Darstellungsgründen nur der gemeinsame Träger 36 des Zahnrads 12₆ des sechsten Ausführungsbeispiels gezeigt. Der gemeinsame Träger 36 weist ausgehend von der Vertiefung oder vom Durchbruch 38 einen Spalt 40 auf, der auch als eine Ausnehmung ausgestaltet sein kann. Hierdurch wird der gemeinsame Träger 36 gezielt geschwächt, so dass er und somit auch die zweiten Zähne 22 eine erhöhte zweite Verformbarkeit v2 aufweist. Insbesondere der mittlere der zweiten Zähne 22 erhält hierdurch eine erhöhte radiale Beweglichkeit.

In den Figuren 7A und 7B ist ein erster Zahn 20 mit einem ersten Verzahnungsprofil 42₁ bzw. ein zweiter Zahn 22 mit einem zweiten Verzahnungsprofil 42₂ anhand einer prinzipiellen Ansicht gezeigt. Das in der Figur 7A dargestellte erste Verzahnungsprofil 42₁ definiert eine Evolventenverzahnung. Das zweite Verzahnungsprofil 42₂ basiert auch auf der in Figur 7A dargestellten Evolventenverzahnung, allerdings weist das zweite Verzahnungsprofil 42₂ eine Kopfmodifikation 44 auf, so dass es nach außen spitzer zuläuft als das in Figur 7A dargestellte erste Verzahnungsprofil 42₁. Alternativ oder zusätzlich kann der zweite Zahn 22 eine erhöhte Zahndicke insbesondere zumindest an einer der Zahnflanken aufweisen.

Des Weiteren weist der mit dem zweiten Verzahnungsprofil 42₂ versehene zweite Zahn 22 eine radial nach außen verlaufende Nut oder eine ebenfalls radial nach außen verlaufende Lücke 46 auf, die den zweiten Zahn 22 axial vollständig durchläuft. Die zweite Verformbarkeit v2 kann hierdurch erhöht werden. Sowohl der erste Zahn 20 als auch der zweite Zahn 22 verlaufen bezogen auf eine Mittelline M symmetrisch. Insbesondere mit Verweis auf die Figuren 1A, 4A und 4C wird deutlich, dass das zweite Verzahnungsprofil 42₂ bezogen auf die Mittellinie M nicht zwangsläufig symmetrisch aufgebaut sein muss, um die erfindungsgemäße Wirkung erreichen zu können.

In Figur 8A ist ein Zahnradgetriebe 48 anhand einer prinzipiellen Schnittdarstellung gezeigt, welches eine erfindungsgemäße Zahnradpaarung 10₇ nach einem siebten Ausführungsbeispiel aufweist. Im dargestellten Zahnradgetriebe 48 ist das erfindungsgemäße Zahnrad 12₇ mit einer Antriebswelle 50 verbunden, wohingegen das weitere Zahnrad 14 mit einer Abtriebswelle 52 verbunden ist. Die Antriebswelle 50 ist mit einer Drehmomentquelle 51, beispielsweise mit einem Elektromotor verbunden.

Die Antriebswelle 50 und die Abtriebswelle 52 sind in einem Gehäuse 54 gelagert, welches einen Hohlraum 56 umschließt, in welchem das Zahnrad 12₇ und das weitere Zahnrad 14 so angeordnet sind, dass sie in kämmendem Eingriff stehen. Das erfindungsgemäße Zahnrad 12₇ ist dabei aus dem bereits erwähnten technischen Thermoplast oder dem Hochleistungsthermoplast gefertigt, wohingegen das weitere Zahnrad 14 aus Metall gefertigt ist. Das weitere Zahnrad 14 kann aber auch aus Kunststoff gefertigt sein. In Figur 8B ist ein erfindungsgemäßes Zahnrad 12₇ nach dem siebten Ausführungsbeispiel anhand einer prinzipiellen Draufsicht gezeigt, welches im in Figur 8A gezeigten Zahnradgetriebe 48 verwendet wird. Im Gegensatz zu den zuvor vorgestellten Ausführungsbeispielen weist das Zahnrad 12₇ nach dem siebten Ausführungsbeispiel eine Schrägverzahnung 58 mit einem Schrägungswinkel β auf, der bis zu 15° und insbesondere zwischen 1° und 10° beträgt. Das weitere Zahnrad 14 weist eine entsprechend gestaltete Schrägverzahnung auf (nicht dargestellt) .

Das erfindungsgemäße Zahnradgetriebe 48 wird auf folgende Weise betrieben: In der Ruhestellung, welche aus Darstellungsgründen in Figur 8A nicht gezeigt ist, befinden sich sowohl die ersten Zähne 20 als auch die zweiten Zähne 22 des Zahnrads 12₇ in Eingriff mit dem weiteren Zahnrad 14. In der Ruhestellung weisen das Zahnrad 12₇ und das weitere Zahnrad 14 eine Ausgangstemperatur, beispielsweise Raumtemperatur auf, die je nach Anwendung am unteren Rand des Betriebstemperaturbereichs des Zahnradgetriebes 48 liegt.

Aufgrund der erhöhten zweiten Verformbarkeit v2 können die zweiten Zähne 22 mit einem Übermaß gegenüber den ersten Zähnen 20 ausgestattet werden, welches sich beispielsweise einer erhöhten Zahndicke äußern kann. Die zweiten Zähne 22 sorgen bei einem großen Betriebstemperaturbereich beispielsweise bei Temperaturen nahe dem unteren Ende des Betriebstemperaturbereichs für ein geringes Verdrehflankenspiel, während die ersten Zähne 20 bei Temperaturen nahe dem oberen Ende des Betriebstemperaturbereichs das Verdrehflankenspiel gering halten. Im Betrieb des Zahnradgetriebes 48, der insbesondere mit dem Aktivieren der Drehmomentquelle 51 gestartet wird. erwärmen sich das Zahnrad 12₁ und das weitere Zahnrad 14. Eine Erwärmung des Zahnrads 12₁ und des zweiten Zahnrads 14 kann aber auch durch äußere im Betrieb auftretende Einflüsse bewirkt werden, beispielsweise dann, wenn ein thermischer Prozess unter Verwendung von Wasserdampf in unmittelbarer Umgebung des Zahnradgetriebes 48 durchgeführt wird. Es gibt auch Anwendungen, bei denen sich das Zahnradgetriebe 48 aufgrund der im Betrieb auftretenden Einflüsse abkühlt, beispielsweise bei in unmittelbarer Umgebung durchgeführten Kälteprozessen oder wenn das Zahnradgetriebe 48 im Betrieb in kältere Umgebungen bewegt wird, wie es beispielsweise bei PKW oder Flugzeugen der Fall sein kann.

Im Folgenden wird aber der Fall betrachtet, dass sich das Zahnradgetriebe 48 im Betrieb erwärmt. Wie erwähnt, ist der Eingriff der ersten Zähne 20 bei der Ausgangstemperatur, die üblicherweise am unteren Ende des Betriebstemperaturbereichs liegt, nicht optimal, allerdings verbessert sich der Eingriff der ersten Zähne 20 mit steigender Temperatur, um beispielsweise am oberen Ende des Betriebstemperaturbereichs sein Optimum zu erreichen. Aufgrund der erhöhten zweiten Verformbarkeit v2 der zweiten Zähne 22 führt das Übermaß der zweiten Zähne 22 nicht zu einem Verklemmen der in Eingriff stehenden Zahnräder, wenn das obere Ende des Betriebstemperaturbereichs erreicht ist.

### Bezugszeichenliste

- 10: Zahnradpaarung
- 10₁ - 10₆: erstes bis sechstes Ausführungsbeispiel der Zahnradpaarung
- 12: Zahnrad
- 12₁ - 12₆: erstes bis sechstes Ausführungsbeispiel des Zahnrads
- 14: weiteres Zahnrad
- 16: Grundkörper
- 18: Zahnkranz
- 20: erste Zähne
- 22: zweite Zähne
- 24: Nabenabschnitt
- 26: Verbindungssteg
- 28: Verbindungsabschnitt
- 30: ringförmige Vertiefung
- 32: Rippen
- 36: gemeinsamer Träger
- 38: Durchbruch
- 40: Spalt
- 42: Verzahnungsprofil
- 42₁: erstes Verzahnungsprofil
- 42₂: zweites Verzahnungsprofil
- 44: Kopfmodifikation
- 46: Lücke
- 48: Zahnradgetriebe
- 50: Antriebswelle
- 51: Drehmomentquelle
- 52: Antriebswelle
- 54: Gehäuse
- 56: Hohlraum
- 58: Schrägverzahnung
- AA: Axialabstand
- AS: Abstand zwischen zwei zweiten Zähnen
- AU: umfänglicher Abstand
- B: Breite
- B1: erste Breite
- B2: zweite Breite
- E: Elastizitätsmodul
- E1: erstes Elastizitätsmodul
- E2: zweites Elastizitätsmodul
- L: Längsachse
- M: Mittellinie
- S: kreissektorförmiger Bereich
- v1: erste Verformbarkeit
- v2: zweite Verformbarkeit

- α1: erster Wärmeausdehnungskoeffizient
- α2: zweiter Wärmeausdehnungskoeffizient
- β: Schrägungswinkel

## Patentansprüche

1. Zahnrad (12) zur Verwendung in einem Zahnradgetriebe (48), umfassend
- einen Grundkörper (16), der einen Zahnkranz (18) mit
- einer Anzahl von ersten Zähnen (20) mit einer ersten Verformbarkeit (v1) und
- einer Anzahl von zweiten Zähnen (22) mit einer zweiten Verformbarkeit (v2) bildet, wobei
- die zweite Verformbarkeit (v2) größer ist als die erste Verformbarkeit (v1) **dadurch gekennzeichnet, dass**
- die zweiten Zähne (22) ein Übermaß nur in Umfangsrichtung gegenüber den ersten Zähnen (20) aufweisen.

2. Zahnrad (12) nach Anspruch 1,
**dadurch gekennzeichnet, dass** der Zahnkranz (18) im Bereich der ersten Zähne (20) in Umfangsrichtung unterbrechungsfrei geschlossen ist.

3. Zahnrad (12) nach einem der Ansprüche 1 oder 2,
**dadurch gekennzeichnet, dass** das Zahnrad (12) eine Längsachse (L) aufweist und die ersten Zähne (20) bezogen auf die Längsachse (L) unter Bildung eines Axialabstands (AA) versetzt zu den zweiten Zähnen (22) angeordnet sind.

4. Zahnrad (12) nach Anspruch 3,
**dadurch gekennzeichnet, dass** die ersten Zähne (20) eine erste Breite (B1) und die zweiten Zähne (22) eine zweite Breite (B2) aufweisen, wobei die erste Breite (B1) größer ist als die zweite Breite (B2).

5. Zahnrad (12) nach einem der vorherigen Ansprüche,
**dadurch gekennzeichnet, dass** der Grundkörper (16) einen Nabenabschnitt (24) bildet und die zweiten Zähne (22) Verbindungsstege (26) umfassen, welche die zweiten Zähne (22) mit dem Nabenabschnitt (24) verbinden.

6. Zahnrad (12) nach den Ansprüchen 4 und 5,
**dadurch gekennzeichnet, dass**
- sich bezogen auf die Längsachse (L) in radialer Richtung die zweite Breite (B2) ändert, und/oder
- auf den Verbindungsstegen (26) eine Anzahl von Rippen (32) angeordnet sind.

7. Zahnrad (12) nach einem der vorherigen Ansprüche,
**dadurch gekennzeichnet, dass** die zweiten Zähne (22) in einem kreissektorförmigen Bereich (S) des Zahnrads (10) angeordnet sind.

8. Zahnrad (12) nach einem der Ansprüche 3 und 7,
**dadurch gekennzeichnet, dass** die erste Breite (B1) der ersten Zähne (20) im kreissektorförmigen Bereich (S) geringer ist als außerhalb des kreissektorförmigen Bereichs (S).

9. Zahnrad (12) nach einem der vorherigen Ansprüche,
**dadurch gekennzeichnet, dass** die zweiten Zähne (22) auf einem gemeinsamen Träger (36) angeordnet sind.

10. Zahnrad (12) nach Anspruch 9,
**dadurch gekennzeichnet, dass** der Zahnkranz (18) im Bereich der zweiten Zähne (22) innerhalb des gemeinsamen Trägers (36) in Umfangsrichtung unterbrechungsfrei ist.

11. Zahnrad (12) nach einem der Ansprüche 9 oder 10,
**dadurch gekennzeichnet, dass** der Träger (36) entlang der Längsachse (L) einen Durchbruch (38) oder eine Vertiefung aufweist.

12. Zahnrad (12) nach den Ansprüchen 9 und 11,
**dadurch gekennzeichnet, dass** der Träger (36) eine vom Durchbruch (38) oder von der Vertiefung ausgehende und radial nach außen verlaufende Ausnehmung oder einen vom Durchbruch (38) oder von der Vertiefung ausgehenden und radial nach außen verlaufenden Spalt (40) aufweist.

13. Zahnrad (12) nach einem der Ansprüche 9 bis 12,
**dadurch gekennzeichnet, dass** der Träger (36) in Richtung der Längsachse (L) einen Axialabstand (AA) und/oder in Umfangsrichtung einen Umfangsabstand (AU) zu den ersten Zähnen (20) aufweist.

14. Zahnrad (12) nach einem der vorherigen Ansprüche,
**dadurch gekennzeichnet, dass** die zweiten Zähne (22) ein Verzahnungsprofil (42) mit einer Zahnkopfmodifikation (44) aufweisen.

15. Zahnrad (12) nach einem der vorherigen Ansprüche,
**dadurch gekennzeichnet, dass** die zweiten Zähne (22) eine radial nach außen verlaufende Nut oder eine radial nach außen verlaufende Lücke (46) aufweisen.

16. Zahnrad (12) nach einem der vorherigen Ansprüche,
**dadurch gekennzeichnet, dass** das Zahnrad (12) aus einem technischen Thermoplast oder einem Hochleistungsthermoplast besteht.

17. Zahnrad (12) nach Anspruch 16,
**dadurch gekennzeichnet, dass** das Zahnrad (12) ein Elastizitätsmodul (E) von 1000 bis 3500 MPa aufweist.

18. Zahnrad (12) nach Anspruch 17,
**dadurch gekennzeichnet, dass** der technische Thermoplast oder der Hochleistungsthermoplast ganz oder teilweise selbstverstärkend oder faserverstärkt ist, wobei der Faseranteil bis zu 35% beträgt.

19. Zahnrad (12) nach Anspruch 16,
**dadurch gekennzeichnet, dass** das Zahnrad (12) dort, wo der technische Thermoplast oder der Hochleistungsthermoplast selbstverstärkend oder faserverstärkt ist, ein E-Modul (E) von zwischen 6000 und 13000 MPa aufweist.

20. Zahnrad (12) nach einem der vorherigen Ansprüche,
**dadurch gekennzeichnet, dass**
- die ersten Zähne (20) aus einem ersten technischen Thermoplast oder einem ersten Hochleistungsthermoplast bestehen und
- die zweiten Zähne (22) aus einem zweiten technischen Thermoplast oder einem zweiten Hochleistungsthermoplast bestehen, wobei
- der zweite technische Thermoplast oder der zweite Hochleistungsthermoplast ein geringeres Elastizitätsmodul (E) und/oder einen geringeren Wärmeausdehnungskoeffizient (α) aufweist als der erste technische Thermoplast oder der erste Hochleistungsthermoplast.

21. Zahnrad (12) nach einem der vorherigen Ansprüche,
**dadurch gekennzeichnet, dass** das Zahnrad (12) eine Geradverzahnung oder eine Schrägverzahnung (58) mit einem Schrägungswinkel (β) von bis zu 15° aufweist.

22. Zahnradpaarung (10) eines Zahnradgetriebes, umfassend
- ein Zahnrad (12) nach einem der vorherigen Ansprüche, und
- zumindest ein weiteres Zahnrad (14), welches mit dem Zahnrad (12) in Eingriff bringbar ist oder in Eingriff steht.

23. Zahnradgetriebe (48), umfassend eine Zahnradpaarung (10) nach Anspruch 22.

## Claims

1. Gear wheel (12) for use in a gear wheel transmission (48),
comprising
- a main body (16) that comprises a ring gear (18) with
- numerous first teeth (20) with a first formability (v1) and
- numerous second teeth (22) with a second formability (v2), wherein
- the second formability (v2) is larger than the first formability (v1),
**characterized in that**
- the second teeth (22) are only circumferentially sized over the first teeth (20).

2. Gear wheel (12) in accordance with claim 1,
**characterized in that** the ring gear (18) is closed without interruption in the region of the first teeth (20).

3. Gear wheel (12) in accordance with either of claims 1 or 2,
**characterized in that** the gear wheel (12) comprises a longitudinal axis (L) and **in that** the first teeth (20) are arranged offset to the second teeth (22) relative to the longitudinal axis (L) under formation of an axial distance (AA).

4. Gear wheel (12) in accordance with claim 3,
**characterized in that** the first teeth (20) comprise a first width (B1) and **in that** the second teeth (22) comprise a second width (B2), wherein the first width (B1) is larger than the second width (B2).

5. Gear wheel (12) in accordance with any of the preceding claims,
**characterized in that** the main body (16) forms a hub segment (24) and **in that** the second teeth (22) comprise connecting bars that connect the second teeth (22) to the hub segment (24).

6. Gear wheel (12) in accordance with the claims 4 and 5,
**characterized in that**
- the second width (B2) changes in a radial direction relative to the longitudinal axis (L), and/or
- numerous ribs (32) are arranged on the connecting bars (26).

7. Gear wheel (12) in accordance with any of the preceding claims,
**characterized in that** the second teeth (22) are arranged in a circle sector-shaped region (S) of the gear wheel (10).

8. Gear wheel (12) in accordance with either of the claims 3 or 7,
**characterized in that** the first width (B1) of the first teeth (20) is smaller in the circle sector-shaped region (S) than outside of the circle sector-shaped region (S).

9. Gear wheel (12) in accordance with any of the preceding claims,
**characterized in that** the second teeth (22) are arranged on a shared carrier (36).

10. Gear wheel (12) in accordance with claim 9,
**characterized in that** the ring gear (18) is circumferentially uninterrupted in the region of the second teeth (22) within the shared carrier (36).

11. Gear wheel (12) in accordance with either of claims 9 or 10,
**characterized in that** the carrier (36) comprises an interruption or an indentation along the longitudinal axis (L).

12. Gear wheel (12) in accordance with the claims 9 and 11,
**characterized in that** the carrier (36) comprises a recession that extends radially outwards from the interruption (38) or from the indentation or a gap (40) that extends radially outwards from the interruption (38) or from the indentation.

13. Gear wheel (12) in accordance with any of claims 9 to 12,
**characterized in that** the carrier (36) comprises, to the first teeth (20), an axial distance (AA) in the direction of the longitudinal axis (L) and/or a circumferential distance (AU) in the circumferential direction.

14. Gear wheel (12) in accordance with any of the preceding claims,
**characterized in that** the second teeth (22) comprise a toothed profile (42) with a tooth head modification (44).

15. Gear wheel (12) in accordance with any of the preceding claims,
**characterized in that** the second teeth (22) comprise a groove extending radially outwards or a gap (46) extending radially outwards.

16. Gear wheel (12) in accordance with any of the preceding claims,
**characterized in that** the gear wheel (12) consists of a technical thermoplastic or of a high-performance thermoplastic.

17. Gear wheel (12) in accordance with claim 16,
**characterized in that** the gear wheel (12) comprises a modulus of elasticity (E) of 1000 to 3500 MPA.

18. Gear wheel (12) in accordance with claim 17,
**characterized in that** the technical thermoplastic or the high-performance thermoplastic is self-reinforcing or is fiber-reinforced, wherein the fiber content is up to 35%.

19. Gear wheel (12) in accordance with claim 16,
**characterized in that** the gear wheel (12) comprises an E-module (E) of between 6000 and 13000 MPA there, where the technical thermoplastic or the high-performance thermoplastic is self-reinforcing or fiber-reinforced.

20. Gear wheel (12) in accordance with any of the preceding claims,
**characterized in that**
- the first teeth (20) consist of a first technical thermoplastic or of a first high-performance thermoplastic and
- the second teeth (22) consist of a second technical thermoplastic or of a second high-performance thermoplastic, wherein
- the second technical thermoplastic or the second high-performance thermoplastic comprises a smaller elasticity module (E) and/or a smaller thermal expansion coefficient (α) than the first technical thermoplastic or the first high-performance thermoplastic.

21. Gear wheel (12) in accordance with any of the preceding claims,
**characterized in that** the gear wheel (12) comprises spur teeth or helical teeth (58) with a helix angle (β) of up to 15°.

22. Gear wheel pair (10) of a gear wheel transmission, comprising
- a gear wheel (12) in accordance with any of the preceding claims, and
- at least one further gear wheel (14) which can be made to engage with or is engaged with the gear wheel (12).

23. Gear wheel transmission (48) comprising a gear wheel pair (10) in accordance with claim 22.

## Revendications

1. Roue dentée (12) destinée à un engrenage (48) comprenant :
- un corps de base (16) muni d'une couronne dentée (18) avec :
* un nombre de premières dents (20) ayant une première déformabilité (v1), et
* un nombre de secondes dents (22) ayant une seconde déformabilité (v2),
- la seconde déformabilité (v2) étant supérieure à la première déformabilité (v1),
roue dentée **caractérisée en ce que**
- les secondes dents (22) sont surdimensionnées seulement dans la direction périphérique par rapport aux premières dents (20).

2. Roue dentée (12) selon la revendication 1,
**caractérisée en ce que**
dans la zone des premières dents (20) la couronne dentée (18) est fermée sans discontinuité dans la direction périphérique.

3. Roue dentée (12) selon l'une des revendications 1 ou 2,
**caractérisée en ce que**
la roue dentée (12) a un axe longitudinal (L) et les premières dents (20) sont décalées par rapport aux secondes dents (22) d'un écart axial (AA) selon l'axe longitudinal (L).

4. Roue dentée (12) selon la revendication 3,
**caractérisée en ce que**
les premières dents (20) ont une première largeur (B1) et les secondes dents (22) ont une seconde largeur (B2), la première largeur (B1) étant supérieure à la seconde largeur (B2).

5. Roue dentée (12) selon l'une des revendications précédentes,
**caractérisée en ce que**
le corps de base (16) forme un segment de moyeu (24) et les secondes dents (22) ont des entretoises de liaison (26) reliant les secondes dents (22) au segment de moyeu (24).

6. Roue dentée (12) selon l'une des revendications 4 et 5,
**caractérisée en ce que**
- la seconde largeur (B2) varie dans la direction radiale selon l'axe longitudinal (L), et/ou
- les entretoises de liaison (26) ont un certain nombre de nervures (32).

7. Roue dentée (12) selon l'une des revendications précédentes,
**caractérisée en ce que**
les secondes dents (22) sont dans une zone (S) en forme de secteur de cercle de l'engrenage (10).

8. Roue dentée (12) selon l'une des revendications 3 et 7,
**caractérisée en ce que**
la première largeur (B1) des premières dents (20) dans la zone en forme de secteur de cercle (S) est inférieure à celle à l'extérieur de la zone (S) en forme de secteur de cercle.

9. Roue dentée (12) selon l'une des revendications précédentes,
**caractérisée en ce que**
les secondes dents (22) sont sur un support commun (36).

10. Roue dentée (12) selon la revendication 9,
**caractérisée en ce que**
la couronne dentée (18) est sans discontinuité dans la direction périphérique dans la zone des secondes dents (22) à l'intérieur du support commun (36).

11. Roue dentée (12) selon l'une des revendications 9 ou 10,
**caractérisée en ce que**
le support (36) présente un passage (38) ou une cavité selon l'axe longitudinal (L).

12. Roue dentée (12) selon l'une des revendications 9 et 11,
**caractérisée en ce que**
le support (36) a un évidement issu de la cavité et s'étend radialement vers l'extérieur ou une fente (40) issue du passage (38) ou de la cavité et s'étendant radialement vers l'extérieur.

13. Roue dentée (12) selon l'une des revendications 9 à 12,
**caractérisée en ce que**
le support (36) présente par rapport aux premières dents (20) un écart axial (AA) dans la direction de l'axe longitudinal (L) et/ou un écart périphérique (AU) dans la direction périphérique.

14. Roue dentée (12) selon l'une des revendications précédentes,
**caractérisée en ce que**
les secondes dents (22) ont un profil de dent (42) avec une modification de la tête de dent (44).

15. Roue dentée (12) selon l'une des revendications précédentes,
**caractérisée en ce que**
les secondes dents (22) ont une rainure dirigée radialement vers l'extérieur ou un intervalle (46) dirigé radialement vers l'extérieur.

16. Roue dentée (12) selon l'une des revendications précédentes,
**caractérisée en ce que**
la roue dentée (12) est réalisée en une matière thermoplastique technique ou une matière thermoplastique à haute performance.

17. Roue dentée (12) selon la revendication 16,
**caractérisée en ce que**
la roue dentée (12) a un module d'élasticité (E) compris entre 1000 et 3500 MPa.

18. Roue dentée (12) selon la revendication 17,
**caractérisée en ce que**
la matière thermoplastique technique ou la matière thermoplastique à haute performance est en partie autorenforcée ou renforcée par des fibres, la teneur en fibres allant jusqu'à 35%.

19. Roue dentée (12) selon la revendication 16,
**caractérisée en ce que**
la roue dentée (12) a un module d'élasticité (E) compris entre 6000 et 13000 MPa là où la matière thermoplastique technique ou la matière thermoplastique à haute performance est autorenforcée ou est renforcée par des fibres.

20. Roue dentée (12) selon l'une des revendications précédentes,
**caractérisée en ce que**
- les premières dents (20) sont en une première matière thermoplastique technique ou en une matière thermoplastique à haute performance, et/ou
- les secondes dents (22) sont en une seconde matière thermoplastique technique ou en une seconde matière thermoplastique à haute performance,
- la seconde matière thermoplastique technique ou la seconde matière thermoplastique à haute performance ont un module d'élasticité (E) moindre et/ou un coefficient de dilatation thermique (a), moindre que celui de la première matière thermoplastique technique ou de la première matière thermoplastique à haute performance.

21. Roue dentée (12) selon l'une des revendications précédentes,
**caractérisée en ce que**
la roue dentée (12) a une denture droite ou une denture inclinée (58) avec un angle d'inclinaison (β) allant jusqu'à 15°.

22. Appariement (10) d'un engrenage comprenant :
- une roue dentée (12) selon l'une des revendications précédentes, et
- au moins une autre roue dentée (14) qui peut être mise en prise ou être en prise avec cette roue dentée (12).

23. Engrenage (48) comprenant un appariement de roues dentées (10) selon la revendication 22.
